# EUROPEAN PATENT APPLICATION

(11) **EP 2 000 282 A1**
(43) Date of publication of application: **10.12.2008**
(21) Application number: 07425362.6
(22) Date of filing: 08.06.2007
(51) Int. Cl.: B29C 47/38, B29C 47/44

(54) **Adjustable extruder for processing different thermoplastic materials**

(71) Applicant: Sovema S.p.A., 37069 Villafranca (IT)
(72) Inventor: Spiazzi, Tiziano, 37100 Verona (IT)
(74) Representative: Feltrinelli, Secondo Andrea

(57) **Abstract**

The machine for the extrusion of thermoplastic material comprises a basic frame (2), an elongated plasticization chamber (4) associated with the basic frame (2) and having one first end (6) through which the thermoplastic material enters associable with a feeding unit for feeding the thermoplastic material and with a second end (7) through which the thermoplastic material exits, associable with an extrusion unit, a feeder screw (11) arranged inside the plasticization chamber (4) and suitable for moving the thermoplastic material forward from the first (6) to the second end (7), a motor unit (12) associated with the feeder screw (11), and variation means for varying the area of passage of the thermoplastic material defined between the feeder screw (11) and the plasticization chamber (4) which are associated with relative adjustment means (18).

## Description

This invention refers to a machine for the extrusion of thermoplastic material, in particular laminates in the shape of sheets, sections, slabs or films.

In addition, the machine, which the present invention refers to, is intended to be advantageously used industrially on thermoplastic product manufacturing lines starting with polymeric materials such as polystyrene, polypropylene, PET, etc.

There are different machines already on the market for the extrusion of thermoplastic products which are traditionally composed of a base frame standing on the ground on which a plasticization chamber is fixed, elongated in shape, defined by a series of controlled temperature areas.

A feeding unit is associated with a first end of the plasticization chamber that has one or more hoppers to feed the chamber with raw materials, the colouring master and with other additives.

At the other end, the plasticization chamber is associated with an extrusion unit with several elements that complete the extrusion phase and which normally consist of a filter, a gear pump, a mixer and an outlet mouth that gives the extruded item its shape, arranged in series.

A feeder screw is housed inside the plasticization chamber which is made to rotate by a motor unit to move the plastic forward, confined by the heated walls of the chamber, towards the extrusion unit.

In agreement with a first, widely used solution, a first type of machine for the extrusion of thermoplastic material sees the motor unit transmitting motion to the shaft of the feeder screw by means of a reduction gear.

Alternatively, it is known to key the shaft of the feeder screw directly on the driving shaft of the motor unit, in which case the transmission of motion requires the use of a thrust block mounted on the head of the motor or placed in between the motor and the plasticization chamber with the aim of opposing the axial thrust on the motor given by the rotation of the feeder screw.

The areas making up the plasticization chamber are heated.

Based on the temperatures of the various areas, on the rotation speed of the feeder screw and on the particular conformation of the feeder screw itself, the thermoplastic material undergoes a specific plasticization process which renders it suitable for extrusion.

Depending on the type of thermoplastic material being processed, however, it is necessary to actuate different plasticization processes.

To this end, it is possible to adjust the plasticization process by modifying the operating temperatures in the various areas of the plasticization chamber and/or change the feeder screw with one of a more suitable shape.

Together with, or as an alternative to the above described systems, it is also known to equip the feeder screw with a particular device, conventionally called "distributive mixer", which can be made in different shapes like, for example, barrier rings, opposing threads, longitudinal transfer threads and others. The distributive mixer can be placed in the central segment of the feeder screw or at the end segment of it at the exit of the plasticization chamber. This distributive mixer normally consists of a cylindrical segment that is mounted co-axially to the plasticization chamber.

The cross section of the distributive mixer is substantially constant along the whole length of the device.

Practically speaking, the distributive mixer lets the thermoplastic material that has reached the correct degree of density and viscosity through and out while it keeps the thermoplastic material that is still unmelted inside the chamber.

The unmelted material remains inside the chamber until it too has reached the desired physical properties so it can go through the distributive mixer.

The distributive mixer can also be used to reduce the passage of the material and to increase pressure inside the plasticization chamber to help the material melt or balance the various stages of the feeder screw, if built in several stages.

These machines of the traditional type do have some drawbacks which are mostly related to the difficulty in modifying their operation to suit the type of thermoplastic material that has to be processed.

As a matter of fact, the possibility to correct the temperatures of the plasticization chamber areas is often insufficient to adapt the machine to all the different types of thermoplastic material.

So it often happens that the machines of known type are used just for one or only a few types of thermoplastic material.

But in other cases the process can only be modified only by changing the feeder screw with others of a different shape.

However, by doing this, the manufacturer is forced to keep different types of feeder screw and the cost for this is not negligible, consequently there is a big increase in labour and running costs which has to be evaluated in terms of machine downtimes whenever the feeder screws have to be changed each time the thermoplastic material to process is changed.

As far as concerns the use of distributive mixer, the fact has to be underlined that they do not allow for an adjustment in the forward passage of the thermoplastic material in the plasticization chamber and, disadvantageously, they may also need changing with others of different shapes and sizes according to the type of process to be carried out.

The main aim of the present invention is to provide a machine for the extrusion of thermoplastic material that allows the processing of a vast range of thermoplastic materials that are very different one from the other without the necessity for lengthy and disadvantageous downtimes due to the fact the machine has to be stopped.

Another object of the present invention is to provide a machine that can practically, easily and functionally adapt to the characteristics of the different thermoplastic materials and which can be made ready quickly each time the material to process is changed.

Another object of the present invention is to provide a machine for the extrusion of thermoplastic material that allows to overcome the above mentioned drawbacks of the known technique with a simple, rational, easy and effective to use solution at a limited cost.

The objects illustrated above are achieved by this machine for the extrusion of thermoplastic material, comprising at least one basic frame, at least one elongated plasticization chamber associated with said basic frame and having one first end through which the thermoplastic material enters associable with at least one feeding unit for feeding the thermoplastic material and with a second end through which the thermoplastic material exits, associable with at least one extrusion unit, at least one feeder screw arranged inside said plasticization chamber and suitable for moving said thermoplastic material forward from said first to said second end, and at least one motor unit associated with said feeder screw, characterised in that it comprises variation means for varying the area of passage of said thermoplastic material defined between said feeder screw and said plasticization chamber which are associated with relative adjustment means.

Further characteristics and advantages of the present invention will appear even more evident from the description of some preferred, but not exclusive, embodiments of a machine for the extrusion of thermoplastic material, illustrated indicatively by way of non limiting example, in the attached drawings wherein:
the figure 1 is an elevated side view, partially in section, of a preferred embodiment of the machine according to the invention;
the figure 2 is an elevated side view, partially in section, of an alternative embodiment of the machine according to the invention;
the figure 3 is an elevated side view, partially in section, of another embodiment of the machine according to the invention;

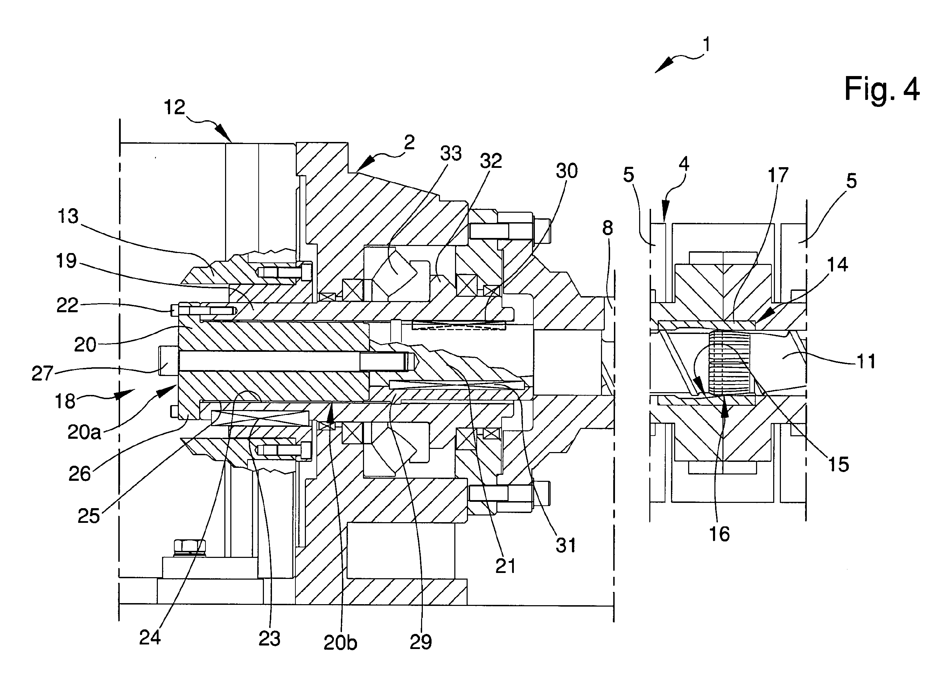

the figure 4 is an elevated side view, on an enlarged scale, of a detail of the machine of the figure 1 in a first operative configuration;

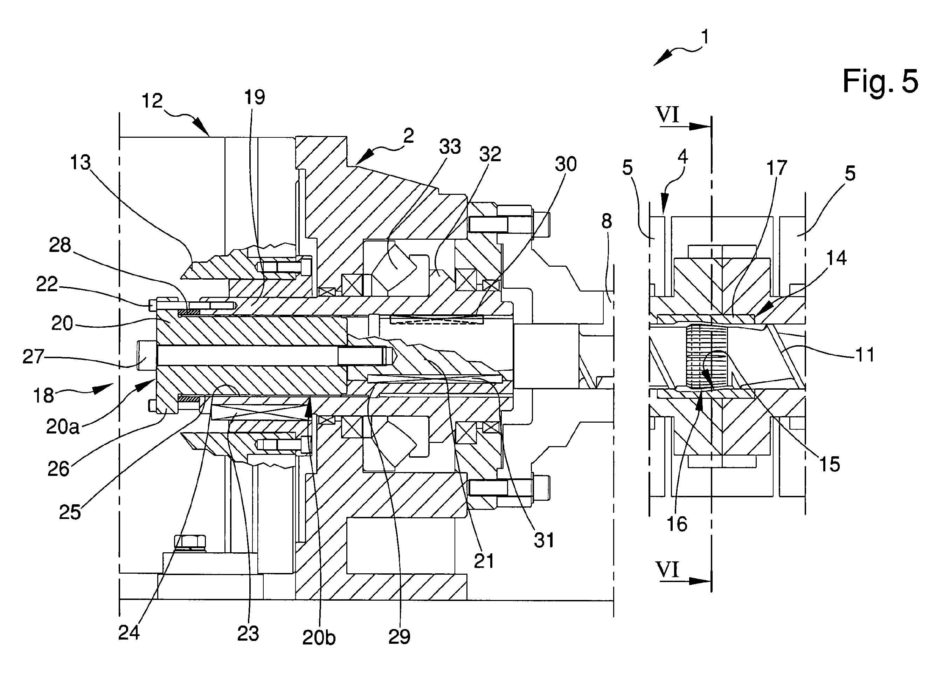

the figure 5 is an elevated side view, on an enlarged scale, of a detail of the machine of the figure 1 in a second operative configuration;
the figure 6 is a section view on the trace plan VI - VI of figure 5.

With special reference to such figures, a machine for the extrusion of thermoplastic material has been globally designated by reference number 1.

The machine 1 comprises a basic frame 2 for standing on the ground.

The basic frame 2 has legs 3 distributed along the length of the machine 1 which support a plasticization chamber 4.

The plasticization chamber 4 develops in a longitudinal direction and is made up of a series of areas 5 which have heating systems that are not illustrated in detail in the figures.

The plasticization chamber 4 has a first end 6 for introducing the thermoplastic material and a second end 7 for the thermoplastic material to come out, which is substantially opposite the first.

On the first end 6 is obtained an inlet opening 8 facing upwards, which is associable with a feeding unit that feeds the thermoplastic material, of the type of one or more hoppers not illustrated in the figures.

The second end 7, instead, finishes with an axial opening 9 from where the thermoplastic material can flow directly to an extrusion unit not illustrated in the figures, which consists of a series of elements that complete the extrusion phase and define the profile of the extruded material.

In a substantially median position with respect to the whole length of the plasticization chamber 4, a discharge vent 10 is created, facing upwards, for the discharge of gasses and vapours that form during the plasticization process.

Inside the plasticization chamber 4 a feeder screw 11 is mounted co-axially the peripheral profile of which works together with the inner heated surface of the plasticization chamber 4 to make the thermoplastic material move forward from the first end 6 to the second end 7.

The feeder screw 11 is made to rotate by a motor unit 12 positioned in proximity of the first end 6.

In the particular embodiments of the invention illustrated in the figures, the motor unit 12 consists of a permanently excited three-phase synchronous motor having a hollow shaft rotor 13 that turns the feeder screw 11 at the same number of revolutions.

Other alternative embodiments are not excluded however wherein, for example the motor unit 12 is a different type and/or a reduction gear device is interposed between the feeder screw 11 and the motor unit 12.

Usefully, the machine 1 comprises variation means 14 which allow to modify the width of the passage area A of the thermoplastic material through the space defined between the feeder screw 11 and the plasticization chamber 4.

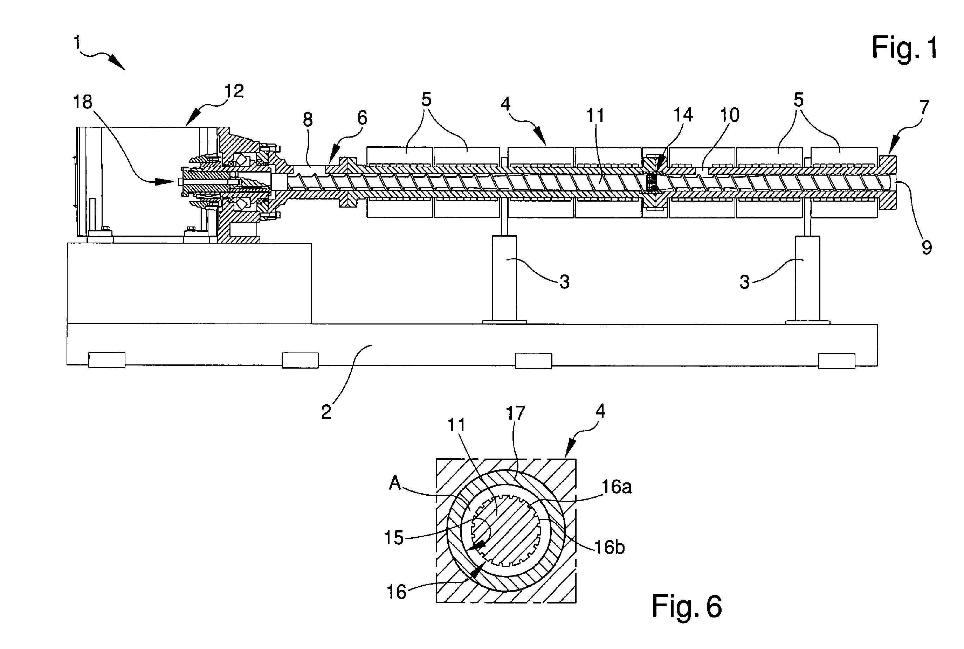

In the particular embodiment of the invention illustrated in figure 1, the variation means 14 are arranged in a substantially median position with respect to the whole length of the plasticization chamber 4, immediately upstream from the discharge vent 10.

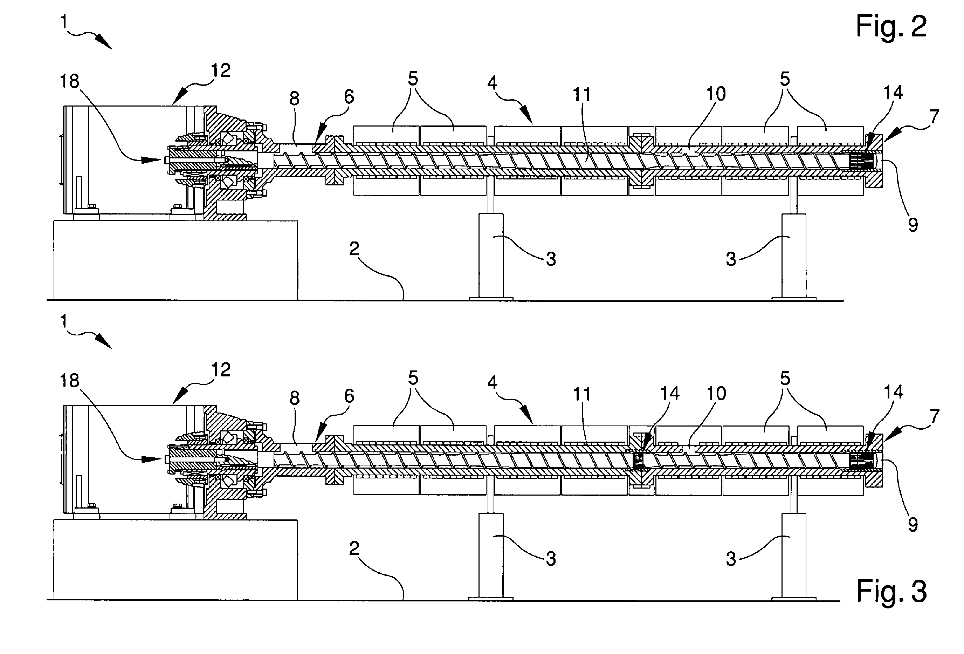

Alternative embodiments of the present invention are, therefore, possible wherein, for example, the variation means 14 are arranged in proximity of the second end 7 of the plasticization chamber 4 and define the end part of the feeder screw 11 like the example illustrated in figure 2.

There are also other possible solutions wherein the variation means 14 are double and arranged both in the centre of the plasticization chamber 4 and in proximity of the second end 7 as illustrated in figure 3.

But other embodiments are not excluded either, wherein the variation means 14 are arranged inside the plasticization chamber 4 in positions different to those previously described and illustrated.

In detail, the variation means 14 are made up of a first segment 15 of inner surface of the plasticization chamber 4 and at least a second segment 16 of outer surface of the feeder screw 11 positioned substantially one facing the other.

Both the first segment 15 and the second segment 16 are in the shape of a truncated cone with the axis co-axial to the rotation axis of the feeder screw 11.

The slant of the first segment 15 is substantially equivalent to the slant of the second segment 16, by slant of the segments 15 and 16 meaning the angle of their apothem with respect to the rotation axis of the feeder screw 11.

In particular, the two segments 15 and 16 are arranged in such a way that their side surfaces are substantially parallel, with decreasing diameters in the direction of forward movement of the thermoplastic material inside the plasticization chamber 4.

In detail, the first segment 15 is defined on a tubular coupling 17 fitted in between two consecutive areas 5 of the plasticization chamber 4.

On the second segment 16 a plurality of grooves 16a and protuberances 16b are created extending in a substantially axial direction and they separate the passage area A of the thermoplastic material in a comb fashion.

The grooves 16a and the protuberances 16b, in effect, make it possible to hold back and prevent the passage of some of the thermoplastic material according to the distance set between the first segment 15 and the second segment 16. The grooves 16a and the protuberances 16b can be of different shapes or may be eliminated altogether.

Advantageously, adjustment means 18 for adjusting the variation means 14 are provided which, for example, are composed of tuning means of the axial relative position of the plasticization chamber 4 and of the feeder screw 11.

In the particular embodiments of the invention illustrated in figures from 1 to 3, the plasticization chamber 4 is fixed and the adjustment means 18 are suitable for setting the axial position of the feeder screw 11 with respect to the plasticization chamber 4. Such adjustment means, therefore, make it possible to modify the relative position between the first segment 15, substantially fixed, and the second segment 16 of the variation means 14, so as to select the desired passage area A for the thermoplastic material.

But other embodiments are not excluded either, wherein the axial position of the feeder screw 11 remains constant and it is possible to alter the axial position of the plasticization chamber 4 or, simpler still, that of the tubular coupling 17 of the variation means 14.

The adjustment means 18 comprise a first body 19 associable with the rotor 13 of the motor unit 12 which can be made to operate turning around the rotation axis of the feeder screw 11, a second body 20 associable with an end tang 21 of the feeder screw 11, and connection means 22 of the second body 20 to the first body 19 in a selectable axial position.

The first body 19, for example, is made up of a sleeve whose outer surface is fixable inside the rotor 13 by means of a tab 23 and inside which the second body 20 is positionable.

The sleeve 19 has an inner surface 24 at least part of which is threaded and into which a corresponding outer threaded surface 25 of the second body 20 is screwable.

The second body 20 has a first end part 20a which is arranged on the side opposite the feeder screw 11, it comes out of the sleeve 19 and has an shoulder 26 on which the sleeve 19 can rest and stop.

In addition, the second body 20 has a second end part 20b, opposite the first, which is positionable against the feeder screw 11 and is associable with it by means of a screw 27 that crosses the second body 20 lengthwise.

The connection means 22 are composed of temporary fixing means of the shoulder 26 to the sleeve 19 which, for example, consist of a plurality of screws distributed in a circle on the shoulder 26.

Spacer means 28 are interposable between the shoulder 26 and the first body 19.

Such spacer means consist of a plurality of ring-shaped elements which can be inserted around the second body 20 and placed against both the shoulder 26 and against the edge of the sleeve 19.

The axial dimensions of the ring-shaped elements 28 are all different so that, according to the type and quantity of ring-shaped elements 28 inserted around the second body 20, it is possible to set the axial distance between the shoulder 26 and the sleeve 19.

Advantageously, the sleeve 19 extends beyond the second end part 20b of the second body 20 until it embraces the end tang 21 of the feeder screw 11.

Between the end tang 21 and the sleeve 19 are interposed keying means 29 that allow to drag the feeder screw 11 in rotation, letting it axially slide with respect to the first body 19.

The keying means 29 comprise a third body, cylindrical in shape and hollow inside, having an outer shape keyable to the inner surface of the sleeve 19 and an inner shape keyable around the end tang 21.

The outer and inner shapes of the third body 29, for example, consist of respective couplings with free tabs 30 and 31 or with equivalent grooved profiles that allow the reciprocal axial sliding of the third body 29 with respect to the sleeve 19 and/or of the feeder screw 11 with respect to the third body 29.

On the outer surface of the first body 19 opposite the end tang 21, the sleeve 19 has an outer support 32 that rests axially on a thrust bearing 33 suitable to counteract the axial stresses transmitted by the feeder screw 11 and due to the reaction force exerted by the thermoplastic material on the screw of the feeder screw 11.

The thrust bearing 33 is, for example, of the conical roller type.

The operation of the present invention is illustrated in the figures from 4 to 6.

For a simpler representation and major clarity in understanding, the way the invention works represented in the figures from 4 to 6 refers to the machine 1 according to the embodiment illustrated in figure 1.

From these figures and the following explanation however, for a person expert in this field it is easy to deduce how it works also in the embodiments represented in the figures 2 and 3.

The adjustment means 18 have to be set before starting the machine 1.

For this purpose, the second body 20 is initially separated both from the sleeve 19 and from the end tang 21 and the ring-shaped elements 28 are inserted or not inserted around it, their task being to define a predefined distance between the shoulder 26 and the edge of the sleeve 19.

At this point, the second body 20 is screwed inside the sleeve 19 until the shoulder 26 is against the sleeve 19 with the interposition, or not, of the ring-shaped elements 28.

In this position, the second body 20 is fixed to the sleeve 19 with the screws 22 and to the end tang 21 with the screw 27.

The operation of the motor unit 12 therefore allows to drag in rotation the sleeve 19, the second body 20, the third body 29 and the feeder screw 11.

Hence the thermoplastic material enters the plasticization chamber 4 through the inlet opening 8 and is pushed, by the rotation of the feeder screw 11, up to the variation means 14.

Depending on the width of the passage area A defined by the first and second segment 15 and 16, the flow of thermoplastic material is therefore adjusted, allowing the passage only to material with pre-established physical properties.

In this way it is possible to balance the flow of thermoplastic material upstream and downstream from the variation means 14, with the purpose, for example, to achieve a regular and correct degassing of the material as it passes by the discharge vent 10.

In this regard, please note that the passage area A of the thermoplastic material by the variation means 14 is determined by the position of the second segment 16 with respect to the first segment 15 which, in turn, is simply set depending on the thermoplastic material to process, choosing the type and quantity of ring-shaped elements 28 to use when the machine 1 is being readied.

The invention thus conceived is susceptible of numerous modifications and variations, all of which falling within the scope of the inventive concept.

Furthermore all the details may be replaced by other elements which are technically equivalent.

In practice, the contingent shapes and dimensions may be any according to requirements without because of this moving outside the protection scope of the following claims.

## Claims

1. Machine for the extrusion of thermoplastic material, comprising at least one basic frame, at least one elongated plasticization chamber associated with said basic frame and having one first end through which the thermoplastic material enters associable with at least one feeding unit for feeding the thermoplastic material and with a second end through which the thermoplastic material exits, associable with at least one extrusion unit, at least one feeder screw arranged inside said plasticization chamber and suitable for moving said thermoplastic material forward from said first to said second end, and at least one motor unit associated with said feeder screw, **characterised in that** it comprises variation means for varying the area of passage of said thermoplastic material defined between said feeder screw and said plasticization chamber which are associated with relative adjustment means.

2. Machine according to claim 1, **characterized in that** said variation means are arranged in a substantially median position with respect to the whole length of said plasticization chamber.

3. Machine according to one or more of the preceding claims, **characterized in that** said variation means are arranged in proximity of said second end of the plasticization chamber.

4. Machine according to one or more of the preceding claims, **characterized in that** said variation means comprise at least a first segment of inner surface of said plasticization chamber and at least a second segment of outer surface of said feeder screw positioned substantially one facing the other, at least one between said first segment and said second segment being substantially in the shape of a truncated cone and co-axial to the rotation axis of said feeder screw.

5. Machine according to one or more of the preceding claims, **characterized in that** both said first and said second segment are substantially in the shape of a truncated cone.

6. Machine according to one or more of the preceding claims, **characterized in that** the slant of said first substantially truncated cone segment is substantially equivalent to the slant of said second substantially truncated cone segment.

7. Machine according to one or more of the preceding claims, **characterized in that** at least one between said first and said second segment comprises a plurality of grooves and protuberances which extend in a substantially axial direction.

8. Machine according to one or more of the preceding claims, **characterized in that** said adjustment means comprise tuning means of the axial relative position of said plasticization chamber and of said feeder screw.

9. Machine according to one or more of the preceding claims, **characterized in that** said plasticization chamber is substantially fixed, said adjustment means being suitable for setting the axial position of said feeder screw with respect to said plasticization chamber.

10. Machine according to one or more of the preceding claims, **characterized in that** said adjustment means comprise at least a first body associable with said motor unit and which can be made to operate turning around the rotation axis of said feeder screw, at least a second body associable with an end of said feeder screw, and connection means of said second body to said first body in a selectable axial position.

11. Machine according to one or more of the preceding claims, **characterized in that** said first body comprises at least a sleeve whose outer surface is fixable to said motor unit and inside which said second body is positionable.

12. Machine according to one or more of the preceding claims, **characterized in that** said sleeve has an inner surface at least part of which is threaded and into which a corresponding outer surface at least part of which is threaded of said second body is screwable.

13. Machine according to one or more of the preceding claims, **characterized in that** said second body has a first end part which comes out of said sleeve and having a supporting shoulder to said sleeve.

14. Machine according to one or more of the preceding claims, **characterized in that** said connection means comprise temporary fixing means of said shoulder to said first body.

15. Machine according to one or more of the preceding claims, **characterized in that** said temporary fixing means comprise at least a screw.

16. Machine according to one or more of the preceding claims, **characterized in that** said connection means comprise spacer means interposable between said shoulder and said first body.

17. Machine according to one or more of the preceding claims, **characterized in that** said spacer means comprise at least one substantially ring-shaped element which can be inserted around said second body between said shoulder and said first body.

18. Machine according to one or more of the preceding claims, **characterized in that** said adjustment means comprise keying means of said feeder screw to said first body suitable for letting said feeder screw axially slide with respect to said first body.

19. Machine according to one or more of the preceding claims, **characterized in that** said keying means comprise at least a third substantially hollow body, having an outer shape keyable to the inner surface of said first body and an inner shape keyable around said end of the feeder screw.
